# EUROPÄISCHE PATENTSCHRIFT

(11) **EP 2 283 992 B1**
(45) Veröffentlichungstag und Bekanntmachung des Hinweises auf die Patenterteilung: **19.06.2019**
(21) Anmeldenummer: 10171852.6
(22) Anmeldetag: 04.08.2010
(51) Int. Cl.: B29C 49/42, B08B 9/00, B29C 33/72, B29C 49/06, B29C 49/12, B29C 49/36, B29C 49/46

(54) **Blasformmaschine mit Anordnung zum Reinigen der Blasform**
Blow-moulding machine with assembly for cleaning the blow mould
Machine de formage par soufflage dotée d'un agencement destiné au nettoyage du moule de soufflage

(30) Priorität: 11.08.2009 DE 102009036920
(43) Veröffentlichungstag der Anmeldung: 16.02.2011
(73) Patentinhaber: Krones AG, 93073 Neutraubling (DE)
(72) Erfinder: Hirdina, Jochen, 93057, Regensburg (DE)
(74) Vertreter: Bittner, Bernhard

(56) Entgegenhaltungen:
- EP-A1- 0 288 581
- EP-A2- 1 312 454
- EP-B1- 0 366 986
- DE-A1- 10 064 167
- DE-A1-102007 017 938

## Beschreibung

Die vorliegende Erfindung bezieht sich auf Vorrichtungen zum Umformen von Kunststoffvorformlingen zu Kunststoffbehältnissen und insbesondere auf Blasformmaschinen. Derartige Blasformmaschinen sind aus dem Stand der Technik seit längerem bekannt. Sie weisen üblicherweise eine Blasform auf, innerhalb derer die Kunststoffvorformlinge durch Druckbeaufschlagung zu Kunststoffbehältnissen expandiert werden. Bei diesem Streckblasvorgang von Kunststoffbehältern scheiden sich sogenannte Oligomere d. h. kurzkettige Moleküle oder Fremdstoffe aus dem Kunststoff der Kunststoffvorformlinge auf der Blasform ab. Die Oberfläche dieser Blasformen wird daher mit zunehmender Verschmutzung stumpf und im Extremfall rau. Dies hat jedoch negative Auswirkungen auf die Flaschenqualität, da dies dazu führen kann, dass die Flaschenoptik wegen der stumpfen Blasformen trübe werden kann oder auch die Kühlung an der Formoberfläche in Folge der Rauhigkeit reduziert ist.

Da beides nicht akzeptabel ist, müssen die Blasformen in regelmäßigen Intervallen gereinigt und in der Regel poliert werden. Besonders hohe Verschmutzungen von Oligomeren treten auf, wenn prozessbedingt (z. B. bei Hotfillverfahren) mit hohen Formtemperaturen gearbeitet werden muss, da die Verschmutzung mit heißen Formen um ein mehrfaches beschleunigt wird und die Reinigung der Formen im heißen Zustand nur mit Sicherheitsrisiko aufgrund der Verbrennungsgefahr durchgeführt werden kann. Insbesondere bei einer sogenannten Hotfilling- (Heißbefüllungs) Anlage mit einem Blasmaschinen und Füllerblock ist diese Formenreinigung oftmals ein sehr negativer Aspekt.

Aus der WO 2008 125216 A2 sind eine Behälterherstellungsvorrichtung und ein Herstellungsverfahren für Formkörper bekannt. Dabei ist eine Strahlungseinrichtung an oder auf der Blasformmaschine angeordnet wobei die Strahlung wenigstens auf einen Bereich der Blasformmaschine gerichtet ist.

Aus der EP 0 288 581 A1, die den Gegenstand der Oberbegriffe der Ansprüche 1 und 6 offenbart, ist eine Rotations-Spritzblasformmaschine bekannt. Dabei sind an der Maschine vier verschiedene Arbeitsstationen I - IV vorhanden, mit jeweilig unterschiedlicher Ausgestaltung, an welchen verschiedene Arbeitsschritte durchgeführt werden können, die jeweils an vier Öffnungen 7 angeordnet sind. Die Arbeitsstation I umfasst hierbei ein Formen eines Vorformlings, die Arbeitsstation II eine Temperatursteuerung, die Arbeitsstation III ein Blasformen und die Arbeitsstation IV ein Lösen der Form, wobei jedoch die Arbeitsstation III ebenso zum Härten/Entspannen, Egalisieren oder Reinigen des Behältnisses ausgebildet sein kann.

Der vorliegenden Erfindung liegt daher die Aufgabe zugrunde, die Reinigung derartiger Blasformmaschinen zu vereinfachen. Der Erfindung liegt weiterhin die Aufgabe zugrunde, ein automatisiertes Verfahren zur Blasformreinigung zur Verfügung zu stellen. Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Behältnissen ist in dem Anspruch 1 definiert.

Die Reinigungseinrichtung weist wenigstens ein erstes Reinigungselement zum Reinigen der Innenwandung der Blasform auf, und dieses Reinigungselement ist wenigstens zeitweise außerhalb der Blasform angeordnet. Vorteilhaft erlaubt die Reinigungseinrichtung eine automatisierte Reinigung der Blasform. So kann beispielsweise ein spezieller Reinigungsmodus vorgesehen sein, in dem die Blasform bzw. deren Innenwandung gereinigt wird. Die vorliegende Erfindung ist jedoch auch auf Blasformmaschinen anwendbar, welche keine Reckstange aufweisen.

Es wird daher vorgeschlagen, ein Reinigungssystem und insbesondere ein sogenanntes CIP-Reinigungssystem (Cleaning-In-Place) zu verwenden, um die Innenwandung der Blasform zu reinigen. Insbesondere in den Zeiten, in denen das Reinigungselement keine Reinigung durchführt, ist dieses außerhalb der Blasform angeordnet. Der Öffnungs- und Schließmechanismus wird vorteilhaft auch dazu verwendet, um eine Blasform mit neuen Kunststoffvorformlingen zu bestücken bzw. fertig geblasene Behältnisse aus der Blasform zu entnehmen.

Bei einer vorteilhaften Ausführungsform weist die Vorrichtung eine Transporteinrichtung auf, welche die Blasformen entlang eines vorgegebenen Transportpfades transportiert. Vorteilhaft ist eine Vielzahl von Blasformen an einem drehbaren Träger und besonders bevorzugt an einem kreisförmigen Träger angeordnet. Bevorzugt handelt es sich dabei um denselben Träger, an dem die Blasformen auch im Normalbetrieb der Vorrichtung angeordnet werden können. Vorteilhaft weist die Vorrichtung einen Reinigungsmodus zum Durchführen der Reinigung der Blasformen auf.

Vorteilhaft sind die Blasformen beweglich gegenüber der Reinigungseinrichtung angeordnet. Dazu ist es möglich, dass die Reinigungseinrichtungen bzw. Reinigungselemente entlang des Transportpfades der Blasformen im normalen Arbeitsbetrieb stationär angeordnet sind. Es wäre jedoch auch möglich, dass die Reinigungseinrichtung gemeinsam mit den Blasformen an einem Träger angeordnet ist und dieser Träger sowohl die Blasformen als auch die Reinigungselemente transportiert.

Das wenigstens ein Reinigungselement ist eine Reinigungsdüse, welche die Innenwandung mit einem flüssigen Reinigungsmedium beaufschlagt.

Als Reinigungsmittel sind solche Substanzen geeignet, die zur Außen- und Innenreinigung (Cip-Reinigung) von Maschinen und Anlagen in getränkeabfüllenden Betrieben verwendet werden können. Beispiel für derartige Reinigungsmittel sind Natronlauge (NaOH), saure Reinigungsmittel auf Basis von Phosphorsäure, saure Reinigungsmittel auf Basis von Salpetersäure, Desinfektionsmittel auf Basis von Essigsäure, Ozon, Wasserstoffperoxyd, chloralkalische Reinigungsmittel, Heißwasser oder Dampf. Daneben könnte als Reinigungsmittel auch Chlordioxyd in Betracht kommen.

Die Reinigungseinrichtung weist ein zweites in Kontakt mit der Innenwand bringbares mechanisch wirkendes Reinigungselement auf. Bei diesem Reinigungselement kann es sich dabei um beispielsweise eine Bürsteneinrichtung handeln, welche vorteilhaft drehbar angeordnet ist. Bevorzugt ist auch dieses zweite Reinigungselement in einem geschlossenen Zustand der Blasform außerhalb dieser angeordnet. Vorteilhaft ist das erste Reinigungselement unabhängig von dem zweiten Reinigungselement steuerbar. Bevorzugt wirken das erste Reinigungselement und das zweite Reinigungselement in unterschiedlicher Weise auf die Innenwandung der Blasform ein.

Das mechanisch wirkende Reinigungselement ist in der Transportrichtung der Blasformen nach der Reinigungsdüse angeordnet. So ist es möglich, dass die Innenwandung zunächst mit dem Reinigungsmedium besprüht wird und anschließend durch die Reinigungsbürste gereinigt bzw. poliert wird.

Bei einer weiteren vorteilhaften Ausführungsform ist das Reinigungselement beispielsweise die Bürste, in der Transportrichtung der Blasformen von der Reinigungsdüse beabstandet. Auf diese Weise vergeht im Reinigungsbetrieb eine vorgegebene Zeitspanne zwischen der Beaufschlagung der Innenwandung mit dem Reinigungsmedium und dem Nachpolieren mit der Bürste, so dass dem Reinigungsmedium eine gewisse Zeit zum Einwirken bleibt. Es wäre jedoch auch möglich, dass beispielsweise bei stehender Blasform zunächst eine Reinigungsdüse in diese eintritt und anschließend eine Reinigungsbürste.

Vorzugsweise sind dabei Transporteinrichtungen zum Bewegen von Reinigungsdüsen oder Reinigungsbürsten vorgesehen. Dabei kann es sich um Transporteinrichtungen handeln, welche die Düsen oder die Bürsten beispielsweise senkrecht zu der Längsrichtung der Blasform bewegen. Es wäre jedoch auch möglich, dass die besagten Elemente in der Längsrichtung der Blasform in die Blasform eingeführt werden.

Die Vorrichtung weist einen drehbaren Träger auf, an dem eine Vielzahl von Blasformen angeordnet ist.

Vorteilhaft weist die Vorrichtung ferner eine Spüleinrichtung zum Spülen der Blasformen auf. Diese Spüleinrichtung ist dabei vorzugsweise zwischen einer Reinigungsdüse und einem zweiten Reinigungselement in Form eines Poliermittels wie einer Bürste vorgesehen, es wäre jedoch auch möglich, dass die Spüleinrichtung in dem Bereich der Bürste vorgesehen ist, oder auch nach dieser.

Die vorliegende Erfindung ist weiterhin auf ein Verfahren zum Umformen von Kunststoffvorformlingen zu Kunststoffbehältnissen gemäß Anspruch 6 gerichtet, wobei die Kunststoffvorformlinge innerhalb eines Hohlraums durch Beaufschlagung mit einem Medium zu Kunststoffvorformlingen expandiert werden und wobei dieser Hohlraum durch wenigstens eine Innenwandung der Blasform ausgebildet wird und die Blasform von einem geführten Zustand in einem geschlossen Zustand überführbar ist. Weiterhin ist ein Reinigungsbetrieb vorgesehen, bei welchem innerhalb der Blasform kein Kunststoffbehältnis aufgenommen ist und wenigstens ein Bereich der Blasform gereinigt wird.

Die Reinigung erfolgt wenigstens teilweise und bevorzugt vollständig in einem geöffneten Zustand der Blasform und ein erstes Reinigungselement zum Reinigen der Innenwandung der Blasform ist wenigstens zeitweise außerhalb der Blasform angeordnet. Dabei ist dieses Element insbesondere in einem herkömmlichen Arbeitsbetrieb, d. h. in einem anderen Betrieb als dem Reinigungsbetrieb außerhalb der Blasform vorgesehen. Vorzugsweise ist dieses Reinigungselement in einem geschlossenen Zustand der Blasform außerhalb dieser angeordnet.

Ein derartiges Reinigungselement ist jedoch nicht ausschließlich zur Verwendung in Blasmaschinen vorgesehen. Insbesondere in Vorrichtungen zum Behandeln von Kunststoffvorformlingen und/oder Kunststoffbehältnissen ist das Reinigen mittels einer CIP-Vorrichtung ("Cippen") möglich. Denkbar wäre das Cippen des Preferential Heating Moduls über eine einführbare Stange oder einen Automaten von außen. Als Preferential Heating Modul wird in diesem Zusammenhang eine Vorrichtung verstanden, die dazu geeignet ist, mindestens einen Kunststoffvorformling derart zu erwärmen, dass er entlang einer Ausdehnungsrichtung ein Temperaturprofil aufweist. Erstreckt sich beispielsweise das Temperaturprofil entlang des Umfanges, ist es während einer nachgeschalteten Expansion des Kunststoffvorformlings möglich, heißere Bereiche stärker zu expandieren als kühlere. Somit ist es einfach möglich, beispielsweise Kunststoffbehältnisse zu erzeugen, die mindestens Abschnittsweise einen ovalen Querschnitt aufweisen.

Auch das Reinigen mittels einer CIP-Vorrichtung weiterer Behandlungseinheiten wie beispielsweise Sterilisationsvorrichtungen ist möglich. Denkbar ist beispielsweise das Cippen eines H₂O₂-Moduls (Wasserstoffperoxydsterilisationsmodul) über eine einführbare Stange oder einen Automaten von außen.

Bei einem vorteilhaften Verfahren wird die Blasform geöffnet und in dem geöffneten Zustand die Innenwandung mit einem flüssigen Reinigungsmittel beaufschlagt.

Bei einem weiteren vorteilhaften Verfahren wird die Innenwandung in einem geöffneten Zustand der Blasform mit einem mechanisch wirkenden Reinigungselement gereinigt. Diese Reinigung mit dem mechanisch wirkenden Reinigungselement erfolgt dabei insbesondere nach Beaufschlagung mit der Flüssigkeit.

Vorteilhaft wird die Blasform transportiert und zwar bevorzugt sowohl während des Arbeitsbetriebes als insbesondere auch während des Reinigungsbetriebs.

Bei einem weiteren vorteilhaften Verfahren wird die Reinigungsflüssigkeit für einen vorgegebenen Zeitraum auf der Innenwandung der Blasform belassen, um auf diese einzuwirken.

Vorteilhaft ist weiterhin ein Spülbetrieb vorgesehen, bei dem die Innenwandung ausgespült wird. Dieser Spülbetrieb ist vorteilhaft nach der Beaufschlagung mit dem Reinigungsmittel vorgesehen und vor oder nach dem Polieren oder Reinigung der Innenwandung mit der Bürste oder dem Reinigungselement. Die Bürste oder das Reinigungselement wird dabei bei einem weiteren bevorzugten Verfahren seitlich, d. h. in einer Richtung senkrecht der Längsrichtung der Blasform eingeschoben.

Weitere Vorteile und Ausführungsformen ergeben sich aus den beigefügten Figuren:
Dabei zeigen:
- Fig. 1: eine Vorrichtung zum Umformen in einer perspektivischen Darstellung; und
- Fig. 2: eine schematische Darstellung einer Anlage.

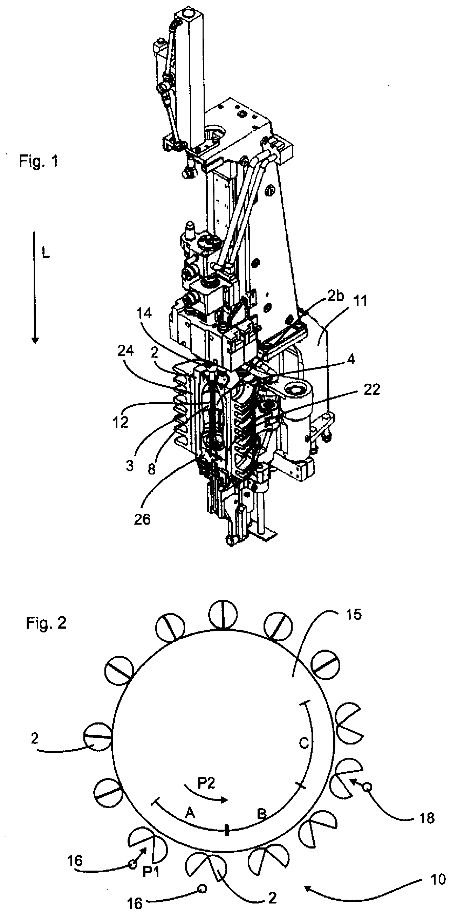

Fig. 1 zeigt eine Vorrichtung zum Umformen von Kunststoffvorformlingen (nicht gezeigt) in Kunststoffbehältnisse (nicht gezeigt). Diese Vorrichtung weist dabei einen Hauptträger 11 auf, an dem eine Blasform 2 in einem Blasformträger 3 (jeweils nur teilweise dargestellt) angeordnet ist.

Innerhalb der Blasform 2 wird ein Hohlraum 4 ausgebildet, innerhalb dessen die Kunststoffvorformlinge zu Kunststoffbehältnissen durch Beaufschlagung mit Druckluft expandiert werden. Weiterhin weist die Vorrichtung eine Reckstange 12 auf, die hier in der Längsrichtung L beweglich ist, um die Kunststoffvorformlinge zu dehnen. Das Bezugszeichen 22 bezieht sich auf eine erste Blasformhälfte und das Bezugszeichen 24 bezieht sich auf eine zweite Blasformhälfte. Daneben weist die Blasform noch einen Boden 26 bzw. ein Bodenteil auf, der im Betrieb den Hohlraum 4 nach unten hin abschließt. Das Bezugszeichen 14 bezieht sich auf eine Druckbeaufschlagungseinrichtung bzw. Blasdüse, welche die Kunststoffvorformlinge mit Druckluft beaufschlagt.

Figur 2 zeigt eine schematische Darstellung zur Veranschaulichung eines Reinigungsablaufs. Dabei ist im Einzelnen eine Maschine in einem vorzugsweise speziellen Reinigungsmodus gezeigt. Genauer gesagt, handelt es sich hier um einen automatischen Reinigungsvorgang, der jedoch auf bereits entwickelnde Maschinen und bereits seitens der Anmelderin entwickelte Formenwechselautomaten aufgebaut werden kann. Diese Formenwechseleinrichtung verfügt bereits über die Fähigkeit, die Formträger automatisch zu öffnen und auch entsprechende Befestigungsschrauben zu lösen und diese wieder anzuziehen. Weiterhin erlaubt diese Anordnung bereits ein automatisches Schließen des Formträgers.

Für die Anwendung als Reinigungseinrichtung werden insbesondere die Funktionen der Befestigung durch die Funktion der Reinigung ersetzt. Dabei wird in einer ersten Stufe bzw. den durch das Bezugszeichen A gekennzeichneten Bereich die Form entriegelt und geöffnet. Ein Sprühkopf 16 beaufschlagt die Innenwandung der geöffneten Blasform 2 mit einem Reinigungsmittel. Für diesen Zweck kann dieser Sprühkopf 10 über eine Transport- oder Verschiebeeinrichtung in den Innenbereich der nunmehr geöffneten Blasform 2 eingefahren werden (Pfeil P1) oder auch mit einer speziellen Vorrichtung wie beispielsweise einem Roboterarm, über die Innenoberfläche 8 der Blasform geführt werden und diese einsprühen.

Auch wäre es möglich, dass mehrere derartiger Sprühköpfe vorgesehen sind. So könnten beispielsweise Sprühköpfe verwendet werden, welche durch das hindurchtretende Reinigungsmedium in Drehung versetzt werden und auf diese Weise das Reinigungsmittel in der vollständigen Umfangsrichtung ausgeben. Auch könnten mehrere derartiger Sprühköpfe in der in Figur 1 gezeigten Längsrichtung L der Blasformen 2 übereinander angeordnet sein.

In dem mit dem Bezugszeichen B gekennzeichneten Bereich wirkt das Reinigungsmittel auf die Innenoberfläche 8 der Blasform 2 (vgl. Fig. 1). Auch wäre es möglich, in diesem Bereich die Blasform wiederum zu schließen, bei der in Figur 2 gezeigten Ausführungsform bleibt jedoch die Blasform 2 in diesem Zustand geöffnet. In dem mit dem Bezugszeichen C gekennzeichneten Abschnitt wird ein zweites Reinigungselement 18 eingesetzt, welches die eingesprühte Innenoberfläche mechanisch säubert. Dabei kann es sich beispielsweise um einen rotierenden Polierkopf handeln, der die Innenoberfläche säubert. Gleichzeitig mit diesem Poliervorgang kann die Innenoberfläche auch mit der Spülflüssigkeit, wie beispielsweise destilliertem Wasser, beaufschlagt werden. Diese Beaufschlagung mit destilliertem Wasser könnte jedoch auch zum Ende des Bereichs B hin stattfinden, oder im Anschluss an den Poliervorgang.

Auch das Reinigungselement 18 wird zum Zwecke der Reinigung in den Innenbereich der geöffneten Blasform 2 eingefahren. Es wäre jedoch auch möglich, dass ein entsprechendes Reinigungselement von oben her oder von unten her in die Blasform eingefahren wird. Auch wären, je nach den geometrischen Abmessungen zwei Polierelemente in Form zweier paralleler Bürsten denkbar, welche die Innenwandung 8 mechanisch säubern.

Im Anschluss an den Bereich C wird die Blasform wieder geschlossen. Das Bezugszeichen 15 kennzeichnet den rotierenden Träger (Pfeil P2) an dem die Blasformen 2 angeordnet sind und das Bezugszeichen 10 die Reinigungseinrichtung in ihrer Gesamtheit. Daneben kann die Vorrichtung (nicht gezeigte) Kurven aufweisen, welche das Öffnen und Schließen der Blasformen 2 bewirken. Daneben können auch Kurven vorhanden sein, welche die Reinigungselemente 16 und 18 in die geöffnete Blasform ein- bzw. aus dieser ausfahren. Diese Bewegungen können jedoch auch von Elektromotoren und insbesondere von Servomotoren erzeugt werden.

Durch die Formenreinigung erübrigt sich eine im Stand der Technik sehr aufwendige manuelle Reinigung. So müssen derzeit die Formen während der Aufbewahrung in einem Formwechselwagen in einer Reinigungsflüssigkeit eingelegt werden. Weiterhin besteht der Vorteil, dass diese automatische Formenreinigung auch bei zum Teil stark erwärmten Blasformen durchgeführt werden kann, was bei einer manuellen Reinigung wegen des Verletzungsrisikos des Benutzers nicht möglich ist. Diese erhöhten Temperaturen insbesondere der Innenoberflächen 8 bieten jedoch den Vorteil einer ggf. höheren Effizienz des Reinigungsmittels und des Reinigungsvorgangs an sich. Vorzugsweise weist die erfindungsgemäße Vorrichtung einen speziellen Reinigungsgang auf, der beispielsweise als Intervallschaltung vorgesehen sein kann. Weiterhin ist ein Ausbau oder ein Öffnen der Blasformen durch den Benutzer nicht mehr nötig und das sicherheitstechnische Risiko wird vermindert, da der Schutzkreis der Maschine auch während der Reinigung geschlossen bleibt.

Weiterhin kann, wie oben erwähnt, eine erhöhte Temperatur der Blasform auch während der Reinigung gehalten werden, bzw. die Blasform kann auch während der Reinigung temperiert bzw. gekühlt werden. Auf diese Weise wird ein schnelleres Wiederanfahren nach dem Reinigungsvorgang gewährleistet.

Es wird darauf hingewiesen, dass die Reinigungsanordnung auch bei bereits bestehenden Anlagen nachgerüstet werden kann. Sowohl das Reinigungselement 16 bzw. der Sprühkopf 16 als auch das Reinigungselement 18 sind, wie in Fig. 2 gezeigt, stationär bezüglich der Drehrichtung des Trägers 15 angeordnet. Es wäre jedoch auch möglich, diese Elemente 16, 18 beweglich anzuordnen, beispielsweise an dem Träger 15. In einem Reinigungsbetrieb können die einzelnen Blasformen 2 (vorzugsweise getaktet) bewegt werden, so dass beispielsweise eine bestimmte Blasform in einer korrekten Position stehen bleibt und anschließend die Reinigungsvorgänge durchgeführt werden.

### Bezugszeichenliste

- 1: Vorrichtung
- 2: Blasform
- 3: Blasformträger
- 4: Hohlraum
- 8: Innenoberfläche
- 10: Reinigungseinrichtung
- 11: Hauptträger
- 12: Reckstange
- 14: Druckbeaufschlagungseinrichtung
- 15: Träger
- 16: erstes Reinigungselement, Sprühkopf
- 18: Reinigungselement
- 22: erste Blasformhälfte
- 24: zweite Blasformhälfte
- 26: Bodenteil
- A, B, C: Bereich
- L: Längsrichtung
- P1, P2: Pfeile

## Patentansprüche

1. Vorrichtung (1) zum Umformen von Kunststoffvorformlingen zu Behältnissen, mit wenigstens einer Blasform (2), welche einen Hohlraum (4) ausbildet, innerhalb dessen die Kunststoffvorformlinge zu Behältnissen umformbar sind, mit einer Druckbeaufschlagungseinrichtung (14), um die Kunststoffvorformlinge mit einem Medium zu beaufschlagen, um diese gegen eine den Hohlraum (4) begrenzende Innenwandung (8) der Blasform (2) zu expandieren, mit einer Reckstange (12), um die Kunststoffvorformlinge in deren Längsrichtung (L) zu dehnen und mit einem Öffnungs- und Schließmechanismus zum Öffnen und Schließen der Blasform (2), wobei die Vorrichtung (1) eine Reinigungseinrichtung (10) aufweist, um Bereiche der Blasform (2) zu reinigen, wobei die Reinigungseinrichtung (10) wenigstens ein erstes Reinigungselement zum Reinigen der Innenwandung (8) der Blasform (2) aufweist und dieses Reinigungselement wenigstens zeitweise außerhalb der Blasform (2) angeordnet ist, **dadurch gekennzeichnet, dass** die Vorrichtung (1) einen drehbaren Träger (15) aufweist, an dem eine Vielzahl von Blasformen angeordnet ist und das wenigstens eine Reinigungselement eine Reinigungsdüse (16) ist, mittels deren die Innenwandung (8) mit einem flüssigen Reinigungsmedium beaufschlagbar ist und die Reinigungseinrichtung (10) ein zweites, in Kontakt mit der Innenwandung (8) bringbares mechanisch wirkendes Reinigungselement (18) aufweist, wobei das zweite, mechanisch wirkende Reinigungselement (18) in der Transportrichtung der Blasformen (2) nach der Reinigungsdüse (16) angeordnet ist.

2. Vorrichtung (1) nach Anspruch 1,
**dadurch gekennzeichnet, dass**
die Vorrichtung eine Transporteinrichtung aufweist, welcher die Blasformen (2) entlang eines vorgegebenen Transportpfades transportierbar sind.

3. Vorrichtung (1) nach wenigstens einem der vorangegangenen Ansprüche,
**dadurch gekennzeichnet, dass**
die Blasform (2) beweglich gegenüber der Reinigungseinrichtung (10) angeordnet ist.

4. Vorrichtung nach Anspruch 1,
**dadurch gekennzeichnet, dass**
das zweite, mechanisch wirkende Reinigungselement (18) in der Transportrichtung der Blasformen (2) von der Reinigungsdüse (16) beabstandet ist.

5. Vorrichtung nach wenigstens einem der vorangegangenen Ansprüche,
**dadurch gekennzeichnet, dass**
die Vorrichtung eine Spüleinrichtung zum Spülen der Blasformen (2) aufweist.

6. Verfahren zum Umformen von Kunststoffvorformlingen zu Kunststoffbehältnissen, wobei die Kunststoffvorformlinge innerhalb eines Hohlraums (4) durch Beaufschlagung mit einem Medium zu Kunststoffvorformlingen expandiert werden und wobei dieser Hohlraum (4) durch wenigstens eine Innenwandung einer Blasform (2) ausgebildet wird, und die Blasform (2) von einem geöffneten Zustand in einen geschlossenen Zustand überführbar ist, wobei ein Reinigungsbetrieb vorgesehen ist, bei welchem innerhalb der Blasform (2) kein Kunststoffbehältnis aufgenommen ist und wenigstens ein Bereich der Blasform (2) gereinigt wird, wobei die Reinigung in einem geöffneten Zustand der Blasform (2) erfolgt und ein erstes Reinigungselement zum Reinigen der Innenwandung (8) der Blasform (2) wenigstens zeitweise außerhalb der Blasform (2) angeordnet ist, **dadurch gekennzeichnet, dass** die Blasform (2) an einem drehbaren Träger (15) angeordnet ist, an dem eine Vielzahl von Blasformen angeordnet ist und das wenigstens eine Reinigungselement eine Reinigungsdüse (16) ist, mittels deren die Innenwandung (8) mit einem flüssigen Reinigungsmedium beaufschlagt wird und die Reinigungseinrichtung (10) ein zweites, in Kontakt mit der Innenwandung (8) bringbares mechanisch wirkendes Reinigungselement (18) aufweist, wobei das zweite, mechanisch wirkende Reinigungselement (18) in der Transportrichtung der Blasformen (2) nach der Reinigungsdüse (16) angeordnet ist.

7. Verfahren nach Anspruch 6,
**dadurch gekennzeichnet, dass**
die Blasform (2) geöffnet wird und in dem geöffneten Zustand die Innenwandung (8) mit einem flüssigen Reinigungsmittel beaufschlagt wird.

8. Verfahren nach Anspruch 6,
**dadurch gekennzeichnet, dass**
die Innenwandung (8) in einem geöffneten Zustand der Blasform (2) mit dem zweiten, mechanisch wirkenden Reinigungselement (18) gereinigt wird.

9. Verfahren nach Anspruch 7,
**dadurch gekennzeichnet, dass**
die Reinigungsflüssigkeit für einen vorgegebenen Zeitraum auf der Innenwandung (8) belassen wird, um auf diese einzuwirken.

10. Verfahren nach wenigstens einem der vorangegangenen Ansprüche 6 - 9,
**dadurch gekennzeichnet, dass**
ein Spülbetrieb vorgesehen ist, in dem die Innenwandung (8) ausgespült wird.

## Claims

1. Apparatus (1) for transforming plastic preforms into containers, comprising at least one blow mould (2) which forms a cavity (4), inside which the plastic preforms can be transformed into containers, comprising a pressure application device (14) for applying a medium to the plastic preforms in order to expand the latter against an inner wall (8) of the blow mould (2) delimiting the cavity (4), comprising a stretching rod (12) for stretching the plastic preforms in the longitudinal direction (L) thereof, and comprising an opening and closing mechanism for opening and closing the blow mould (2), wherein the apparatus comprises a cleaning device (10) for cleaning regions of the blow mould (2),
wherein
the cleaning device (10) comprises at least a first cleaning element for cleaning the inner wall (8) of the blow mould (2), and this cleaning element is arranged at least at times outside the blow mould (2),
**characterized in that**
the apparatus (1) comprises a rotatable carrier (15), on which a plurality of blow moulds is arranged and the at least one cleaning element is a cleaning nozzle (16) which applies a liquid cleaning medium to the inner wall (8) and the cleaning device (10) has a second mechanically acting cleaning element (18) which can be brought into contact with the inner wall (8), wherein the second mechanically acting cleaning element (18) is arranged after the cleaning nozzle (16) in the transport direction of the blow moulds (2).

2. Apparatus (1) according to claim 1,
**characterized in that**
the apparatus comprises a transport device which transports the blow moulds (2) along a predefined transport path.

3. Apparatus (1) according to at least one of the preceding claims,
**characterized in that**
the blow mould (2) is arranged such as to be movable relative to the cleaning device (10).

4. Apparatus according to claim 1,
**characterized in that**
the second mechanically acting cleaning element (18) is spaced apart from the cleaning nozzle (16) in the transport direction of the blow moulds (2).

5. Apparatus according to at least one of the preceding claims,
**characterized in that**
the apparatus comprises a rinsing device for rinsing the blow moulds (2).

6. Method for transforming plastic preforms into plastic containers, wherein the plastic preforms are expanded inside a cavity (4) through the application of a medium to form plastic preforms, and wherein this cavity (4) is formed by at least one inner wall of a blow mould (2), and the blow mould (2) can be transferred from an open state to a closed state, wherein a cleaning mode is provided, in which no plastic container is accommodated inside the blow mould (2) and at least one region of the blow mould (2) is cleaned,
wherein
the cleaning takes place in an open state of the blow mould (2) and a first cleaning element for cleaning the inner wall (8) of the blow mould (2) is arranged at least at times outside the blow mould (2),
**characterized in that**
the blow mould (2) is arranged on a rotatable carrier (15) on which a plurality of blow moulds is arranged and the at least one cleaning element is a cleaning nozzle (16), by means of which a liquid cleaning medium is applied to the inner wall (8) and the cleaning device (10) has a second mechanically acting cleaning element (18), which can be brought into contact with the inner wall (8), wherein the second mechanically acting cleaning element (18) is arranged in the transport direction of the blow moulds (2) after the cleaning nozzle (16).

7. Method according to claim 6,
**characterized in that**
the blow mould (2) is opened and a liquid cleaning agent is applied to the inner wall (8) in the open state.

8. Method according to claim 6,
**characterized in that**
the inner wall (8) is cleaned with the second mechanically acting cleaning element (18) in an open state of the blow mould (2).

9. Method according to claim 7,
**characterized in that**
the cleaning fluid is left on the inner wall (8) for a predefined period of time in order to act thereon.

10. Method according to at least one of the preceding claims 6-9,
**characterized in that**
a rinsing mode is provided, in which the inner wall (8) is rinsed.

## Revendications

1. Dispositif (1) destiné à transformer des ébauches en matière plastique en contenants, pourvu d'au moins un moule de soufflage (2), lequel forme une cavité (4) à l'intérieur de laquelle les ébauches en matière plastique peuvent être transformées en contenants, d'un système d'application de pression (14), afin de soumettre les ébauches en matière plastique à l'effet d'un milieu, pour élargir celles-ci contre une paroi intérieure (8) du moule de soufflage (2), laquelle paroi délimite la cavité (4), d'une tige d'étirage (12), afin d'étirer les ébauches en matière plastique dans la direction longitudinale (L) de celles-ci, et d'un mécanisme d'ouverture et de fermeture, destiné à ouvrir et à fermer le moule de soufflage (2), dans lequel le dispositif (1) présente un système de nettoyage (10), afin de nettoyer des zones du moule de soufflage (2),
dans lequel
le système de nettoyage (10) présente au moins un premier élément de nettoyage destiné à nettoyer la paroi intérieure (8) du moule de soufflage (2) et cet élément de nettoyage est agencé au moins par intermittence à l'extérieur du moule de soufflage (2),
**caractérisé en ce que**
le dispositif (1) présente un support (15) rotatif, sur lequel une pluralité de moules de soufflage sont agencés et le au moins un élément de nettoyage est une buse de nettoyage (16), au moyen de laquelle la paroi intérieure (8) peut être soumise à l'effet d'un milieu de nettoyage liquide et le système de nettoyage (10) présente un deuxième élément de nettoyage (18) à action mécanique pouvant être amené en contact avec la paroi intérieure (8),
dans lequel le deuxième élément de nettoyage (18) à action mécanique est agencé en aval de la buse de nettoyage (16) dans le sens de transport des moules de soufflage (2).

2. Dispositif (1) selon la revendication 1,
**caractérisé en ce que**
le dispositif présente un système de transport, au moyen duquel les moules de soufflage (2) peuvent être transportés le long d'un trajet de transport prédéfini.

3. Dispositif (1) selon au moins l'une des revendications précédentes,
**caractérisé en ce que**
le moule de soufflage (2) est monté mobile par rapport au système de nettoyage (10).

4. Dispositif selon la revendication 1,
**caractérisé en ce que**
le deuxième élément de nettoyage (18) à action mécanique est espacé de la buse de nettoyage (16) dans le sens de transport des moules de soufflage (2).

5. Dispositif selon au moins l'une des revendications précédentes,
**caractérisé en ce que**
le dispositif présente un système de rinçage destiné à rincer les moules de soufflage (2).

6. Procédé pour transformer des ébauches en matière plastique en contenants en matière plastique, dans lequel les ébauches en matière plastique sont élargies en ébauches en matière plastique en étant soumises à l'effet d'un milieu à l'intérieur d'une cavité (4) et dans lequel cette cavité (4) est formée par au moins une paroi intérieure d'un moule de soufflage (2), et le moule de soufflage (2) peut passer d'un état ouvert à un état fermé, dans lequel un mode nettoyage est prévu, selon lequel aucun contenant en matière plastique n'est logé à l'intérieur du moule de soufflage (2) et au moins une zone du moule de soufflage (2) est nettoyée,
dans lequel
le nettoyage s'effectue dans un état ouvert du moule de soufflage (2) et un premier élément de nettoyage destiné à nettoyer la paroi intérieure (8) du moule de soufflage (2) est agencé au moins par intermittence à l'extérieur du moule de soufflage (2),
**caractérisé en ce que**
le moule de soufflage (2) est agencé sur un support (15) rotatif sur lequel une pluralité de moules de soufflage (2) sont agencés et le au moins un élément de nettoyage est une buse de nettoyage (16), au moyen de laquelle la paroi intérieure (8) est soumise à l'effet d'un milieu de nettoyage liquide et le système de nettoyage (10) présente un deuxième élément de nettoyage (18) à action mécanique pouvant être amené en contact avec la paroi intérieure (8),
dans lequel le deuxième élément de nettoyage (18) à action mécanique est agencé en aval de la buse de nettoyage (16) dans le sens de transport des moules de soufflage (2).

7. Procédé selon la revendication 6,
**caractérisé en ce que**
le moule de soufflage (2) est ouvert et, dans l'état ouvert, la paroi intérieure (8) est soumise à l'effet d'un milieu de nettoyage liquide.

8. Procédé selon la revendication 6,
**caractérisé en ce que**
la paroi intérieure (8), dans un état ouvert du moule de soufflage (2), est nettoyée au moyen du deuxième élément de nettoyage (18) à action mécanique.

9. Procédé selon la revendication 7,
**caractérisé en ce que**
le liquide de nettoyage est laissé sur la paroi intérieure (8) pendant un laps de temps prédéfini, afin d'agir sur celle-ci.

10. Procédé selon au moins l'une des revendications précédentes 6 à 9,
**caractérisé en ce que**
un mode rinçage est prévu, dans lequel la paroi intérieure (8) est rincée.
